# FASCICULE DE BREVET EUROPEEN

(11) **EP 2 316 703 B1**
(45) Date de publication et mention de la délivrance du brevet: **22.08.2012**
(21) Numéro de dépôt: 10183202.0
(22) Date de dépôt: 30.09.2010
(51) Int. Cl.: B60T 13/74, B60T 8/17, B60T 8/88, B64C 25/42

(54) **Architecture d'alimentation de freins d'aéronef équipés d'actionneurs électromécaniques**
Steuerungshierarchie für elektromechanische Flugzeugbremse
Electromechanical aeroplane brake control achitecture

(30) Priorité: 30.10.2009 FR 0905216
(43) Date de publication de la demande: 04.05.2011
(73) Titulaire: Messier-Bugatti-Dowty, 78140 Velizy Villacoublay (FR)
(72) Inventeur: Frank, David, 75013, PARIS (FR)
(74) Mandataire: Parzy, Benjamin Alain

(56) Documents cités:
- EP-A1- 1 547 918
- US-A1- 2008 142 318
- US-A1- 2008 149 436
- US-A1- 2008 258 547
- US-A1- 2008 258 548

## Description

Il est connu des aéronefs comportant des atterrisseurs dont les roues sont équipées de freins à actionneurs électromécaniques. Les freins sont en général alimentés par des boîtiers d'alimentation qui distribuent la puissance aux actionneurs. Les boîtiers d'alimentation reçoivent la puissance d'au moins un bus de puissance électrique de l'aéronef, qui transporte la puissance générée par les générateurs électriques qui sont entraînés par les réacteurs ou par l'unité de puissance auxiliaire.

Les constructeurs aéronautiques se préoccupent de plus en plus de la disponibilité des divers équipements, et en particulier du système de freinage. On peut distinguer plusieurs types de pannes touchant le système de freinage :
1. une panne n'entravant pas l'opération de l'aéronef et n'empêchant pas son départ en vol, et pour laquelle une deuxième panne intervenant lors de ce vol serait sans conséquence pour la sécurité ni les performances du système de freinage ;
2. une panne n'empêchant pas l'opération de l'aéronef et n'empêchant pas son départ en vol, mais pour laquelle une deuxième panne intervenant lors de ce vol peut engendrer une dégradation des performances ;
3. une panne empêchant l'opération de l'aéronef, mais qui peut être réparée pendant le temps de rotation de l'aéronef sur l'aéroport, permettant un départ de l'aéronef dans les temps ou avec un retard gérable (typiquement quelques minutes) ;
4. une panne empêchant le départ de l'aéronef, mais pouvant être réparé moyennant un retard important, n'imposant pas d'annuler le vol ;
5. une panne empêchant le départ de l'aéronef, dont la réparation entraînerait un retard tel que le vol doit être annulé.

Seules les pannes du premier type permettent l'opération de l'aéronef sans aucune conséquence économique, la réparation de l'équipement défaillant pouvant être effectuée lors d'une maintenance programmée. Les pannes du deuxième type ne sont en soi que potentiellement limitantes, puisque ce n'est que dans l'éventualité d'une deuxième panne que les performances du système de freinage seraient diminuées, ce qui conduirait la compagnie à limiter les marges d'opération de l'aéronef (en particulier en limitant la masse maximale de l'aéronef). Les pannes du troisième type ont un impact opérationnel nul mais économiquement important, puisqu'elles impliquent une maintenance non programmée.

Quant aux pannes du quatrième et du cinquième type, elles entraînent des surcoûts liés à l'indemnisation des passagers, voire une dégradation de l'image de la compagnie.

Il est donc désirable de faire évoluer le système de freinage de sorte que, dans la mesure du possible, il ne puisse être susceptible que de pannes du premier type. Il est ainsi recherché un système de freinage restant disponible et opérationnel quelle que soit la panne affectant l'un ou l'autre des équipements du système de freinage.

A cet égard, on connaît des documents US6296325, EP 1 547 918 et US6402259 des architectures de système de freinage comportant un certain nombre de boîtiers (EMAC) alimentant des actionneurs de freins équipant les roues des atterrisseurs principaux, chaque EMAC contrôlant un groupement d'actionneurs des freins de chaque roues d'un atterrisseur. Dans les architectures proposées, la panne d'un EMAC est très gênante si elle n'est pas traitée immédiatement. En effet, l'aéronef pourrait être opéré avec un EMAC en panne. Il suffirait de demander aux actionneurs qui restent alimentés de fournir un effort de freinage plus important pour garantir les performances de freinage. Cependant, une éventuelle perte additionnelle de l'EMAC contrôlant la partie complémentaire des actionneurs équipant les roues du même atterrisseur principal conduirait à une dissymétrie totale dans laquelle tous les actionneurs des freins des roues portés par cet atterrisseur sont dès lors incapables d'exercer une action de freinage.

### OBJET DE L'INVENTION

L'invention a pour objet de proposer une architecture d'alimentation préservant une capacité raisonnable de freinage de l'aéronef, même en cas de panne d'un boîtier d'alimentation, en cas de panne d'une source de puissance de l'aéronef, ou encore en cas de rupture d'un câble d'alimentation.

### BREVE DESCRIPTION DE L'INVENTION

En vue de la réalisation de ce but, on propose une architecture d'alimentation de freins d'aéronef, pour un aéronef comportant au moins deux atterrisseurs comportant chacun un certain nombre de roues, chacune des roues étant équipée de freins comportant chacun un certain nombre d'actionneurs électromécaniques de freinage, caractérisé en ce que l'architecture comporte au moins des premier, deuxième, troisième et quatrième boîtiers d'alimentation, les premiers et troisième boîtiers d'alimentation étant alimentés par une première source de puissance, les deuxième et quatrième boîtiers d'alimentation étant alimentés par une deuxième source de puissance, les roues étant sur chacun des atterrisseurs regroupés en un premier et deuxième groupes complémentaires et les boîtiers d'alimentation alimentant des groupements complémentaires d'actionneurs de freinage dans chacun des groupes de roues de la façon suivante :
- le premier boîtier d'alimentation alimente un groupement d'actionneurs de chacune des roues du premier groupe de roues du premier atterrisseur, et un groupement d'actionneurs de chacune des roues du premier groupe de roues du deuxième atterrisseur ;
- le deuxième boîtier d'alimentation alimente un groupement complémentaire d'actionneurs de chacune des roues du premier groupe de roues du premier atterrisseur, et un groupement d'actionneurs de chacune des roues du deuxième groupe de roues du deuxième atterrisseur ;
- le troisième boîtier d'alimentation alimente un groupement d'actionneurs de chacune des roues du deuxième groupe de roues du premier atterrisseur, et un groupement complémentaire d'actionneurs de chacune des roues du deuxième groupe de roues du deuxième atterrisseur ;
- le quatrième boîtier d'alimentation alimente un groupement complémentaire d'actionneurs de chacune des roues du deuxième groupe de roues du premier atterrisseur, et un groupement complémentaire d'actionneurs de chacune des roues du premier groupe de roues du deuxième atterrisseur.

Ainsi, la perte de l'un des boîtiers d'alimentation conduit au plus à la perte de la partie des actionneurs de l'un des groupes de roues associée à ce boîtier d'alimentation. Les actionneurs perdus étant répartis sur les deux atterrisseurs, chaque atterrisseur compte un nombre suffisant d'actionneurs alimentés pour pouvoir assurer un freinage symétrique.

Cette panne n'affecte pas l'opération de l'aéronef, puisque la perte de ces actionneurs peut être facilement compensée en faisant développer par les actionneurs de la partie complémentaire correspondante un effort de freinage plus important.

Une panne subséquente d'un autre boîtier d'alimentation reste également gérable, c'est-à-dire que le freinage peut encore être assuré sur les deux atterrisseurs principaux, avec au pire une dissymétrie qui peut encore être compensée sans perte de performance, de sorte que la première panne est bien du premier type.

### BREVE DESCRIPTION DES FIGURES

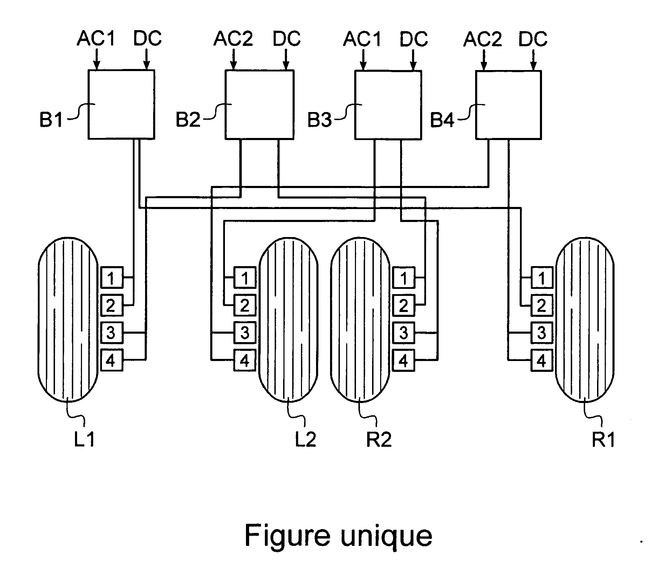

L'invention sera mieux comprise à la lumière de l'unique figure représentant schématiquement une architecture de freinage selon l'invention

### DESCRIPTION DETAILLEE DES FIGURES

L'invention est ici décrite en relation avec un aéronef du type « A320^{®} » ou « B737 » ou tout autre avion à quatre roues freinées (avions d'affaire, avions de transport régionaux...), comportant deux atterrisseurs principaux portant chacun deux roues freinées, respectivement désignées L1 et L2 pour les roues portées par l'atterrisseur principal gauche, et R1 et R2 pour les roues portées par l'atterrisseur principal droit.

Chacune des roues est équipée d'un frein électromécanique comportant ici quatre actionneurs par frein (respectivement numérotés 1,2,3,4 sur chacune des roues).

L'architecture comporte ici quatre boîtiers d'alimentation, respectivement B1, B2, B3 et B4, agencés pour recevoir de la puissance électrique de l'un des bus de puissance de l'aéronef. En l'occurrence, les boîtiers d'alimentation B1 et B3 reçoivent la puissance d'un premier bus de puissance AC1 (typiquement une tension alternative de 115 volts, 400 hertz), et les boîtiers d'alimentation B2 et B4 reçoivent la puissance d'un deuxième bus de puissance AC2 (mêmes caractéristiques), indépendant du premier bus de puissance. Les boîtiers peuvent être alimentés en tension alternative non redressée, ou encore en tension continue redressée.

En outre, les quatre boîtiers d'alimentation sont connectés à une source de tension continue DC (par exemple les batteries de l'aéronef, typiquement 28 volts continus).

Les boîtiers d'alimentation alimentent les actionneurs de frein selon la disposition suivante :
- le boîtier B1 alimente les actionneurs 1,2 de la roue L1 portée par l'atterrisseur principal gauche, et les actionneurs 1,2 de la roue R1 portée par l'atterrisseur principal droit ;
- le boîtier B2 alimente les actionneurs 3,4 de la roue L1 portée par l'atterrisseur principal gauche, et les actionneurs 1,2 de la roue R2 portée par l'atterrisseur principal droit ;
- le boîtier B3 alimente les actionneurs 1,2 de la roue L2 portée par l'atterrisseur principal gauche, et 3,4 de la roue R2 portée par l'atterrisseur principal droit ;
- le boîtier B4 alimente les actionneurs 3,4 de la roue L2 portée par l'atterrisseur principal gauche, et les actionneurs 3,4 de la roue R1 portée par l'atterrisseur principal droit ;

Cette disposition présente les avantages illustrés sur le tableau suivant, qui représente l'incidence de la panne de l'un des boîtiers d'alimentation sur la capacité de freinage de l'aéronef :

| Boîtier en panne | B1 | B2 | B3 | B4 |
|---|---|---|---|---|
| Actionneurs valides sur L1 | 3,4 | 1,2 | 1,2,3,4 | 1,2,3,4 |
| Actionneurs valides sur L2 | 1,2,3,4 | 1,2,3,4 | 3,4 | 1,2 |
| Actionneurs valides sur R2 | 1,2,3,4 | 3,4 | 1,2 | 1,2,3,4 |
| Actionneurs valides sur R1 | 3,4 | 1,2,3,4 | 1,2,3,4 | 1,2 |

Ainsi, on s'aperçoit que la panne de l'un des boîtiers d'alimentation fait perdre deux actionneurs sur l'une des roues de l'un des atterrisseurs, et deux actionneurs sur l'une des roues de l'autre atterrisseur, de sorte que sur chacun des atterrisseurs, six actionneurs de freinage restent alimentés. Il reste donc possible d'effectuer un freinage parfaitement symétrique.

On va maintenant examiner la conséquence de la panne supplémentaire de l'un des boîtiers. Sur les tableaux qui suivent, on examine successivement quels sont les actionneurs qui restent alimentés, lorsqu'après une panne de l'un des boîtiers (nommé en en-tête du tableau), l'un des autres boîtiers tombe en panne.

| Boîtier B1 en panne | B2 | B3 | B4 |
|---|---|---|---|
| Actionneurs valides sur L1 | -- | 3,4 | 3,4 |
| Actionneurs valides sur L2 | 1,2,3,4 | 3,4 | 1,2 |
| Actionneurs valides sur R2 | 3,4 | 1,2 | 1,2,3,4 |
| Actionneurs valides sur R1 | 3,4 | 3,4 | -- |

| Boîtier B2 en panne | B1 | B3 | B4 |
|---|---|---|---|
| Actionneurs valides sur L1 | -- | 1,2 | 1,2 |
| Actionneurs valides sur L2 | 1,2,3,4 | 3,4 | 1,2 |
| Actionneurs valides sur R2 | 3,4 | -- | 3,4 |
| Actionneurs valides sur R1 | 3,4 | 1,2,3,4 | 1,2 |

| Boîtier B3 en panne | B1 | B2 | B4 |
|---|---|---|---|
| Actionneurs valides sur L1 | 3,4 | 1,2 | 1,2,3,4 |
| Actionneurs valides sur L2 | 3,4 | 3,4 | -- |
| Actionneurs valides sur R2 | 1,2 | -- | 1,2 |
| Actionneurs valides sur R1 | 3,4 | 1,2,3,4 | 1,2 |

| Boîtier B4 en panne | B1 | B2 | B3 |
|---|---|---|---|
| Actionneurs valides sur L1 | 3,4 | 1,2 | 1,2,3,4 |
| Actionneurs valides sur L2 | 1,2 | 1,2 | -- |
| Actionneurs valides sur R2 | 1,2,3,4 | 3,4 | 1,2 |
| Actionneurs valides sur R1 | -- | 1,2 | 1,2 |

Ainsi, on s'aperçoit que la perte de deux boîtiers d'alimentation laisse à chaque fois quatre actionneurs alimentés sur chacun des atterrisseurs. Selon le cas, il peut s'agir de deux actionneurs par roue, ou de quatre actionneurs d'une même roue, l'autre roue ne disposant alors plus d'actionneurs alimentés. Ainsi, une double panne ne fait pas perdre totalement le freinage sur plus d'une roue. En pratique, il restera possible de freiner avec au moins trois roues.

Il reste néanmoins possible d'effectuer un freinage symétrique. De même que pour la panne simple, il reste possible de compenser au moins partiellement la perte des actionneurs non alimentés en demandant aux actionneurs restant alimentés de fournir un surcroît d'effort de freinage.

En outre, la perte de l'un des bus de puissance AC1 ou AC2 limite la puissance disponible pour l'alimentation des boîtiers concernés (respectivement B1, B3, ou B2, B4) à la puissance disponible sur la source de puissance continue. Néanmoins, elle ne fait pas perdre entièrement la capacité de freinage des actionneurs reliés aux boîtiers d'alimentation concernés. En particulier, les boîtiers sont avantageusement alimentés par une source auxiliaire de puissance, telle qu'une source de puissance continue ou une batterie.

On remarquera que chacun des boîtiers d'alimentation comporte deux sorties distinctes, une pour chacune des paires d'actionneurs alimentés. Ainsi, la perte d'une liaison électrique entre un boîtier et les actionneurs concernés ne conduit à la perte que de deux actionneurs, et non des quatre actionneurs alimentés par le boîtier.

Il est bien entendu que sur la figure, on a représenté schématiquement des liaisons de puissance directement entre les boîtiers d'alimentation et les actionneurs. Le cas échéant, et s'ils ne sont pas intégrés dans les boîtiers d'alimentation, on pourra interposer entre le boîtier d'alimentation et chaque paire d'actionneur sur chacune des roues un boîtier de commande des actionneurs (l'équivalent des EMAC des documents précités) qui met en forme la puissance reçue des boîtiers d'alimentation pour la fournir de façon calibrée aux deux actionneurs connectés au boîtier de commande en réponse à une consigne de freinage générée par un calculateur de freinage.

De préférence, chaque actionneur est dimensionné pour pouvoir développer, au moins de façon occasionnelle, un effort de freinage équivalent à celui développé par deux actionneurs d'un frein dont tous les actionneurs sont alimentés lors d'un freinage qui amènerait la roue correspondante à la limite du blocage au cours d'un atterrissage sur piste sèche.

Pour un tel freinage, l'effort maximal développé par un actionneur d'un frein dont tous les actionneurs sont alimentés est de l'ordre de 66% de l'effort nominal. Il convient donc de dimensionner les actionneurs pour qu'ils puissent fournir occasionnellement un effort égal à 132% de l'effort nominal.

Ainsi, avec uniquement deux actionneurs sur les quatre, il est donc possible de développer sur la roue concernée un effort de freinage égal à 132/2= 66% de l'effort de freinage nominal, ce qui correspond à l'effort développé par un frein dont tous les actionneurs sont alimentés avant que la roue ne parte au blocage lors d'un atterrissage sur piste sèche. De la sorte, il sera possible d'assurer une performance de freinage nominale sur piste sèche.

L'invention n'est pas limitée à ce qui vient d'être décrit, mais englobe au contraire toute variante entrant dans le cadre défini par les revendications.

En particulier, bien sur l'exemple illustré, les roues sont équipées de freins qui ont un nombre pair d'actionneurs, les actionneurs étant répartis en un premier groupement (actionneurs 1,2) d'actionneurs alimentés par l'un des boîtiers, et un deuxième groupement complémentaire (actionneurs 3,4) d'actionneurs alimentés par un autre boîtier, les groupements ayant un nombre égal d'actionneurs, on pourra plus généralement répartir les actionneurs en deux groupements, même si le nombre d'actionneurs est impair. Dans ce cas, on aura intérêt à définir pour chaque roue deux groupements d'actionneurs qui ne différent que d'au plus d'une unité.

Bien que l'on ait illustré l'invention en relation avec un aéronef à deux atterrisseurs principaux portant chacun deux roues freinées, l'invention se généralise immédiatement à un aéronef dont les deux atterrisseurs principaux portent chacun plus de deux roues freinées, par exemple quatre ou six. Il suffit de définir sur chacun des atterrisseurs deux groupes de roues (par exemple chaque groupe de roues comprend les roues portées d'un même côté de l'atterrisseur) Sur chacun des groupes de roues (et donc de freins) ainsi déterminés, on fait alimenter un premier groupement d'actionneurs par l'un des boîtiers, et un second groupement complémentaire par un autre boîtier, selon l'agencement de l'invention. L'invention se généralise encore au cas des aéronefs comportant plus de deux atterrisseurs principaux. Si l'aéronef comporte par exemple deux atterrisseurs principaux de voilure et un atterrisseur principal central à roues freinées (cas de l'« A340^{®} »-600), il suffira d'affecter les roues portées par l'atterrisseur principal central à l'un ou l'autre des groupes de roues formés par les roues des atterrisseurs principaux de voilure.

Par extension, et pour user d'un vocabulaire commun dans la revendication, on parlera de même de groupe de roues, même si, dans l'exemple illustré, le groupe ne comporte qu'une seule roue.

## Revendications

1. Architecture d'alimentation de freins d'aéronef, pour un aéronef comportant au moins deux atterrisseurs comportant chacun un certain nombre de roues (L1,L2/R1,R2), chacune des roues étant équipée d'un frein comportant un certain nombre d'actionneurs électromécaniques de freinage (1,2,3,4), **caractérisé en ce que** l'architecture comporte au moins des premier, deuxième, troisième et quatrième boîtiers d'alimentation, les premiers et troisième boîtiers d'alimentation (B1,B3) étant alimentés par une première source de puissance (AC1), les deuxième et quatrième boîtiers d'alimentation (B2,B4) étant alimentés par une deuxième source de puissance (AC2), les roues étant sur chacun des atterrisseurs regroupées en un premier et deuxième groupes (L1;R1;L2;R2) complémentaires et les boîtiers d'alimentation alimentant des groupements complémentaires d'actionneurs de freinage dans chacun des groupes de roues de la façon suivante :
- le premier boîtier d'alimentation (B1) alimente un groupement d'actionneurs (1,2) du premier groupe de roues (L1) du premier atterrisseur, et un groupement d'actionneurs (1,2) du premier groupe de roues (R1) du deuxième atterrisseur ;
- le deuxième boîtier d'alimentation (B2) alimente un groupement complémentaire d'actionneurs (3,4) du premier groupe de roues (L1) du premier atterrisseur, et un groupement d'actionneurs (1,2) du deuxième groupe de roues (R2) du deuxième atterrisseur ;
- le troisième boîtier d'alimentation (B3) alimente un groupement d'actionneurs (1,2) du deuxième groupe de roues (L2) du premier atterrisseur, et un groupement complémentaire d'actionneurs (3,4) du deuxième groupe de roues (R2) du deuxième atterrisseur ;
- le quatrième boîtier d'alimentation (B4) alimente un groupement complémentaire d'actionneurs (3,4) du deuxième groupe de roues (L2) du premier atterrisseur, et un groupement complémentaire d'actionneurs (3,4) du premier groupe de roues (R1) du deuxième atterrisseur.

2. Architecture d'alimentation selon la revendication 1, adaptée à un aéronef comportant exactement deux atterrisseurs principaux munis chacun de deux roues freinées (L1,L2;R1,R2) de sorte que sur chaque atterrisseur, chaque groupe de roues est constitué par l'une des roues portée par l'atterrisseur.

3. Architecture d'alimentation selon la revendication 1, dans lequel chaque groupement d'actionneurs d'un groupe donné de roues comporte un nombre d'actionneurs égal ou au plus différent d'une unité du nombre d'actionneurs du groupement complémentaire d'actionneurs.

4. Architecture d'alimentation selon la revendication 1, dans lequel chacun des deux groupements d'actionneurs alimentés par un même boîtier est alimenté au moyen d'un câble distinct.

5. architecture d'alimentation selon la revendication 1, dans lequel chaque actionneur est dimensionné pour pouvoir développer, au moins de façon occasionnelle, un effort de freinage équivalent à celui développé par deux actionneurs d'un frein dont tous les actionneurs sont alimentés lors d'un freinage qui amènerait la roue correspondante à la limite du blocage au cours d'un atterrissage sur piste sèche.

## Claims

1. A power supply architecture for powering aircraft brakes for an aircraft having at least two undercarriages, each having a certain number of wheels (L1, L2; R1, R2), each of the wheels being fitted with a brake having a certain number of electromechanical braking actuators (1, 2, 3, 4), the architecture being **characterized in that** it includes at least first, second, third, and fourth power supply units, the first and third power supply units (B1, B3) being powered by a first power supply source (AC1), the second and fourth power supply units (B2, B4) being powered by a second power supply source (AC2), the wheels on each of the undercarriages being grouped into first and second complementary groups (L1; R1; L2; R2) and the power supply units powering complementary groups of braking actuators in each of the groups of wheels as follows:
• the first power supply unit (B1) powers a group of actuators (1, 2) of the first group of wheels (L1) of the first undercarriage, and a group of actuators (1, 2) of the first group of wheels (R1) of the second undercarriage;
• the second power supply unit (B2) powers a complementary group of actuators (3, 4) of the first group of wheels (L1) of the first undercarriage, and a group of actuators (1, 2) of the second group of wheels (R2) of the second undercarriage;
• the third power supply unit (B3) powers a group of actuators (1, 2) of the second group of wheels (L2) of the first undercarriage, and a complementary group of actuators (3, 4) of the second group of wheels (R2) of the second undercarriage; and
• the fourth power supply unit (B4) powers a complementary group of actuators (3, 4) of the second group of wheels (L2) of the first undercarriage, and a complementary group of actuators (3, 4) of the first group of wheels (R1) of the second undercarriage.

2. A power supply architecture according to claim 1, adapted to an aircraft having exactly two main undercarriages, each provided with two braked wheels (L1, L2; R1, R2) such that on each undercarriage each group of wheels is constituted by one of the wheels carried by the undercarriage.

3. A power supply architecture according to claim 1, wherein each group of actuators of a given group of wheels has a number of actuators equal to the number of actuators of the complementary group of actuators, or differing therefrom by no more than one.

4. A power supply architecture according to claim 1, wherein each of the two groups of actuators powered by a given unit is powered by means of a distinct cable.

5. A power supply architecture according to claim 1, wherein each actuator is dimensioned to develop, at least occasionally, a braking force equivalent to the force developed by two actuators of a brake in which all of the actuators are powered during braking taking the corresponding wheel to its locking limit during a landing on a dry runway.

## Patentansprüche

1. Anordnung zur Stromversorgung von Bremsen eines Luftfahrzeuges für ein Luftfahrzeug, das mindestens zwei Fahrgestelle umfasst, wobei jedes Fahrgestell eine bestimmte Anzahl von Rädern (L1, L2/R1, R2) umfasst, und wobei jedes der Räder mit einer Bremse ausgestattet ist, die eine bestimmte Anzahl von elektromagnetischen Stellgliedern zur Bremsung (1, 2, 3, 4) aufweist, **dadurch gekennzeichnet, dass** die Anordnung mindestens erste, zweite, dritte und vierte Netzteile aufweist, wobei die ersten und dritten Netzteile (B 1, B3) über eine erste Stromversorgungsquelle (AC1) gespeist werden, die zweiten und vierten Netzteile (B2, B4) über eine zweite Stromversorgungsquelle (AC2) gespeist werden, wobei die Räder auf jedem der Fahrgestelle in erste und zweite komplementäre Gruppen (L1; R1; L2; R2) zusammengefasst sind, und die Netzteile komplementäre Gruppierungen von Stellgliedern zur Bremsung in jeder der Rädergruppen auf folgende Weise speisen:
- das erste Netzteil (B1) speist eine Gruppierung von Stellgliedern (1, 2) der ersten Gruppe der Räder (L1) des ersten Fahrgestells und eine Gruppierung von Stellgliedern (1, 2) der ersten Gruppe der Räder (R1) des zweiten Fahrgestells;
- das zweite Netzteil (B2) speist eine komplementäre Gruppierung von Stellgliedern (3, 4) der ersten Gruppe der Räder (L1) des ersten Fahrgestells und eine Gruppierung von Stellgliedern (1, 2) der zweiten Gruppe der Räder (R2) des zweiten Fahrgestells;
- das dritte Netzteil (B3) speist eine Gruppierung von Stellgliedern (1, 2) der zweiten Gruppe von Rädern (L2) des ersten Fahrgestells und eine komplementäre Gruppierung von Stellgliedern (3, 4) der zweiten Gruppe von Rädern (R2) des zweiten Fahrgestells;
- das vierte Netzteil (B4) speist eine komplementäre Gruppierung von Stellgliedern (3, 4) der zweiten Gruppe von Rädern (L2) des ersten Fahrgestells und eine komplementäre Gruppierung von Stellgliedern (3, 4) der ersten Gruppe von Rädern (R1) des zweiten Fahrgestells.

2. Anordnung zur Stromversorgung nach Anspruch 1, angepasst an ein Luftfahrzeug, das exakt zwei Hauptfahrgestelle umfasst, von denen jedes mit zwei abgebremsten Rädern (L1, L2; R1, R2) ausgestattet ist, so dass an jedem Fahrgestell jede Gruppe von Rädern von einem der vom Fahrgestell getragenen Räder gebildet wird.

3. Anordnung zur Stromversorgung nach Anspruch 1, bei dem jede Gruppierung von Stellgliedern einer gegebenen Gruppe von Rädern eine Anzahl von Stellgliedern umfasst, die gleich der Anzahl an Stellgliedern der komplementären Gruppierung von Stellgliedern ist, oder sich von dieser höchstens um eine Einheit unterscheidet.

4. Anordnung zur Stromversorgung nach Anspruch 1, bei dem jede der beiden Gruppierungen von Stellgliedern, die durch dasselbe Netzteil gespeist werden, mittels eines eigenen Kabels gespeist wird.

5. Anordnung zur Stromversorgung nach Anspruch 1, bei dem jedes Stellglied so dimensioniert ist, dass es, zumindest gelegentlich, eine Bremskraft entwickeln kann, die der durch zwei Stellglieder entwickelten Bremskraft einer Bremse entspricht, bei der alle Stellglieder gespeist sind bei einer Bremsung, die das entsprechende Rad im Laufe einer Landung auf trockener Piste an die Blockierungsgrenze bringt.
